# EUROPÄISCHE PATENTSCHRIFT

(11) **EP 2 429 676 B1**
(45) Veröffentlichungstag und Bekanntmachung des Hinweises auf die Patenterteilung: **06.05.2015**
(21) Anmeldenummer: 10721647.5
(22) Anmeldetag: 07.05.2010
(51) Int. Cl.: F03B 11/06, F16C 17/14, F16C 33/10

(54) **LAGERANORDNUNG MIT FILTEREINRICHTUNG**
BEARING ASSEMBLY HAVING FILTER DEVICE
ENSEMBLE PALIER ÉQUIPÉ D'UN DISPOSITIF FILTRANT

(30) Priorität: 14.05.2009 DE 102009021289
(43) Veröffentlichungstag der Anmeldung: 21.03.2012
(73) Patentinhaber: Schaeffler Technologies AG & Co. KG, 91074 Herzogenaurach (DE)
(72) Erfinder: BEDENK, Johannes, 97531 Theres (DE)
(86) Internationale Anmeldenummer: PCT/DE2010/000510
(87) Internationale Veröffentlichungsnummer: WO 2010/130247

(56) Entgegenhaltungen:
- DE-A1-102007 003 618
- DE-A1-102008 023 050
- DE-A1-102008 052 287
- US-A1- 2007 266 679

## Beschreibung

### Gebiet der Erfindung

Die Erfindung betrifft eine Lageranordnung mit einem von einem Medium, insbesondere Wasser, durchströmten Lager.

Aus der Praxis ist für Lageranordnungen mit einem Lager, das von einem Medium, beispielsweise von Wasser durchströmt ist, bekannt, das das Lager durchströmende Medium, insbesondere das Wasser im Fall eines wassergeschmierten Lagers, zu filtern, um Partikel aus dem Lager fernzuhalten. Hierzu sind beispielsweise Filtereinrichtungen mit einem Partikelfilter vorgesehen, die dem Lager einströmseitig vorgeschaltet werden, so dass das Medium erst dann in das Lager tritt, wenn es den Partikelfilter passiert hat. In dem Maße, wie der Partikelfilter Partikel aufnimmt und verschmutzt, sinkt der Durchfluss des Medium, also die pro Zeiteinheit durch das Lager hindurchtretende Menge des Medium. Stark verschmutzte Partikelfilter können den Durchfluss des Mediums durch das Lager weitgehend zum Erliegen bringen, so dass die Schmierung bzw. Kühlung des Lagers durch das Medium stark beeinträchtigt ist. Dieser Nachteil tritt insbesondere dann auf, wenn ein Austauschen des verschmutzten Partikelfilters nicht ohne weiteres möglich ist, beispielsweise bei Meeresströmungskraftwerken, deren Hauptwellenlager unter Wasser befindlich und nicht ohne weiteres zugänglich sind.

Es ist ferner bekannt, Filtereinrichtungen in das Lager der Lageranordnung baulich zu integrieren.

DE 1 132 738 A beschreibt eine Lageranordnung für den Endabschnitt der Zählwelle eines Zählgerätes, insbesondere eines Flüssigkeitszählers, wobei der Endabschnitt der Welle in einer wasserdurchströmten Lagerbüchse angeordnet ist, und wobei einer Stirnfläche der Lagerbüchse eine Filtereinrichtung zugeordnet ist, die einen Ring aus einem Filterwerkstoff umfasst, wobei der Ring die Welle umgibt. Der Ring behindert sowohl das Einströmen in die Lagerbüchse als auch das Abströmen des Mediums aus der Lagerbüchse.

JP 2003042159 AA (Abstract) beschreibt eine Lageranordnung für ein dynamisches Drucklager, wobei eine zentrifugale Abscheidekammer vorgesehen ist, die von der Drehachse der Welle beabstandet angeordnet ist, wobei die Abscheidekammer mit einem Einström- und einem Ausströmbereich der Lageranordnung in fluidischer Verbindung steht.

JP 08338425 AA (Abstract) eine Lageranordnung mit einer Welle, die in einem Lager gelagert ist, wobei das Lager in einem Lagergehäuse aufgenommen ist. Die Lageranordnung ist zur Aufnahme einer unter Wasser angeordneten Welle vorgesehen, wobei das Wasser als Schmiermedium der Welle wirkt. Einströmseitig ist ein Einströmbereich vorgesehen, in dem ein Bewegungsmittel das Wasser in einen Filter einer Filtereinrichtung lenkt. Ausströmseitig ist ein Ausströmbereich vorgesehen, in den das Wasser nach dem Durchfließen des Lagers tritt. Das Bewegungsmittel ist mit der Welle drehfest verbunden und als im wesentlichen radial abstehender Abschnitt ausgebildet. Das Bewegungsmittel weist eine Einlassöffnung auf, aus der heraus das Wasser entweder durch den Feinfilter gelangt oder an dem Feinfilter vorbei zu dem Ausströmbereich. Der Feinfilter ist mit dem Bewegungsmittel fest verbunden.

JP 08135653 AA (Abstract) beschreibt eine Lageranordnung für eine unter Wasser gelagerte Welle, die in einem mit Wasser durchströmten Lager aufgenommen ist. Einströmseitig ist eine Bewegungsplatte zwischen dem Lager und der Lageraufnahme des Lagers angeordnet, die das einströmende Wasser radial nach außen zu einer unter einem Winkel angeordneten Umlenkplatte leitet, von der aus das Wasser entweder radial nach innen zu dem Feinfilter oder parallel zu der Welle in einen Ausströmbereich gelenkt wird. Der Filter der Filtereinrichtung weist einen Abstand zu der Welle auf, so dass Partikel den Filter passieren können. Steht die Welle, so steht ebenfalls die Bewegungsplatte und kein Wasser gelangt durch den Feinfilter.

DE 10 2007 003 618 A1 beschreibt in einem ersten Ausführungsbeispiel (Fig. 3) eine Lageranordnung, bei der einströmseitig ein Kartuschenfilter vorgesehen ist, nach dessen Passieren das Wasser in einen sich konisch verjüngenden Bereich gelangt.

DE 10 2007 003 618 A1 beschreibt in einem zweiten Ausführungsbeispiel (Fig. 2) eine Lageranordnung, bei der einströmseitig ein Kartuschenfilter mit einer nachgeschalteten Filterpumpe vorgesehen ist.

Die nachveröffentlichte Anmeldung DE 10 2008 052 287.2 vom 18. Oktober 2008 beschreibt eine Lageranordnung mit einem Lager, das von einem Medium, insbesondere Wasser, durchströmt ist, einer Filtereinrichtung, die eine einströmseitig angeordnete Schutzkappe und einen der Schutzkappe nachgeschalteten Feinfilter. Die Lageranordnung umfasst weiter eine Fördereinrichtung für das Medium, die dem Lager ausströmseitig nachgeschaltet ist, und die den Fluss des Mediums durch das Lager steuert.

### Aufgabe der Erfindung

Es ist die Aufgabe der Erfindung, eine Lageranordnung anzugeben, die die Filterwirkung für eine lange Zeit aufrechterhält.

### Zusammenfassung der Erfindung

Diese Aufgabe wird für die Lageranordnung nach Anspruch 1 erfindungsgemäß insbesondere dadurch gelöst, dass die Fördereinrichtung zwischen der Schutzkappe und dem Feinfilter angeordnet ist. Die Fördereinrichtung ist damit innerhalb der Filtereinrichtung, nämlich zwischen der Schutzkappe und dem Feinfilter, angeordnet und stellt sicher, dass vor dem Feinfilter eine Druckdifferenz aufgebracht wird, so dass der Feinfilter von einer einstellbaren Menge von Schmiermittel durchströmt werden kann, auch dann, wenn die Durchlässigkeit des Feinfilters aufgrund der zunehmenden Verschmutzung des Filtermaterials abnimmt.

Die Fördereinrichtung bietet den weiteren Vorteil, ein Eindringen von Partikeln in den Zwischenraum zwischen der Schutzkappe und dem Feinfilter zu unterdrücken.

Im folgenden wird die Erfindung, ihre Merkmale und Vorteile sowie vorteilhafte Ausbildungen der Erfindung unter Bezugnahme auf Wasser als das das Lager durchströmende Medium beschrieben; es versteht sich aber, dass anstelle von Wasser auch ein anderes Medium, speziell ein anderes Fluid, vorgesehen sein kann, das das Lager durchströmt.

Vorzugsweise ist vorgesehen, dass die Fördereinrichtung mit der Welle drehfest verbunden ist. Die das Lager durchströmende Menge des Mediums, speziell des Wassers, hängt dann von der Drehgeschwindigkeit der Welle ab, die als Antrieb für die Fördereinrichtung wirkt.

Vorzugsweise ist vorgesehen, dass die Fördereinrichtung als perforierte Ringscheibe ausgebildet ist, die zusätzlich zu der Perforierung noch schaufelartige Strukturen aufweisen kann, um die Förderung des Wassers zu dem Feinfilter zu unterstützen bzw. zu verstärken. Die Ringscheibe ist besonders geeignet, um bei einem stillstehenden Lager ein Eindringen von verschmutztem Wasser zu dem Feinfilter zu unterdrücken.

Alternativ oder ergänzend zu einer Ausbildung der Fördereinrichtung als perforierte Ringscheibe ist vorzugsweise vorgesehen, dass die Fördereinrichtung als Förderpropeller ausgebildet ist. Der Förderpropeller weist eine schaufelartige Strukturierung auf, die ein Ansaugen von Wasser aus der Umgebung der Schutzkappe ermöglicht. Es versteht sich, dass der Förderpropeller zusätzlich zu der Ringscheibe vorgesehen sein kann, wobei die Förderwirkung auf das Wasser im wesentlichen durch den Förderpropeller bewirkt wird, während die Abdeckscheibe im wesentlichen ein Nachdringen von verschmutzten Wasser zu dem Feinfilter unterdrückt, wenn der Förderpropeller stillsteht. In diesem Fall kann die Abdeckscheibe als ebene, mit Löchern versehene Scheibe ausgebildet sein.

Wiederum alternativ oder ergänzend zu einer Ausbildung der Fördereinrichtung als perforierte Ringscheibe oder als Förderpropeller ist vorzugsweise vorgesehen, dass die Fördereinrichtung an einer von der angeströmten Fläche der Schutzkappe abgekehrten Seite der Schutzkappe angeordnet ist. Auf diese Weise lässt sich die Drehung der Schutzkappe zur Förderung des Wassers ausnutzen, insbesondere dann, wenn in besonders vorteilhafter Ausgestaltung vorgesehen ist, dass die Fördereinrichtung als Förderschnecke ausgebildet ist.

Die Fördereinrichtung, insbesondere die Förderschnecke, kann in vorteilhafter Ausgestaltung der Erfindung auch an dem Feinfilter befestigt sein, insbesondere für den Fall, dass die Schutzkappe nicht mit der Welle mitdrehend angeordnet ist.

Vorzugsweise ist vorgesehen, dass die Welle mindestens abschnittsweise als Hohlwelle ausgebildet ist, und dass die Hohlwelle eine Radialbohrung aufweist, die sich zu einem dem Lager einströmseitig vorgelagerten Einströmbereich öffnet. Die Bewegung des Wassers in dem Filter hin zu der Achse der Welle kann die Wirkung eines Rotationsfilters entfalten, bei dem insbesondere schwere Bestandteile des Mediums wie Partikel ferngehalten werden können. Die Ausbildung der Welle als Hohlwelle ermöglicht die Förderung des gefilterten Wassers zu dem einzigen Lager der Lageranordnung oder zu zwei oder mehr beabstandeten Lagern, wobei das Wasser an der Stelle der Radialbohrung aus der Hohlwelle austritt und in den dem Lager einströmseitig vorgelagerten Einströmbereich gelangt. Insbesondere ist es möglich, eine einzige Filtereinrichtung für eine Lageranordnung vorzusehen, die zwei oder mehr in Richtung der Welle beabstandete Lager aufweist, so dass sich der Aufbau sowie die Wartung der Lageranordnung vereinfacht.

Weitere Vorteile und Merkmale der Erfindung ergeben sich aus den abhängigen Ansprüchen sowie aus der Beschreibung von Ausführungsbeispielen.

Die Erfindung wird im folgenden unter Bezugnahme auf die anliegenden Zeichnungen näher beschrieben und erläutert.

### Kurze Beschreibung der Zeichnungen

- Fig. 1: zeigt einen schematischen Schnitt durch ein erstes Ausführungsbeispiel einer erfindungsgemäßen Lageranordnung,
- Fig. 2: zeigt einen schematischen Schnitt durch ein zweites Ausführungsbeispiel einer erfindungsgemäßen Lageranordnung, und
- Fig. 3: zeigt einen schematischen Schnitt durch ein drittes Ausführungsbeispiel einer erfindungsgemäßen Lageranordnung.

### Detaillierte Beschreibung der Zeichnungen

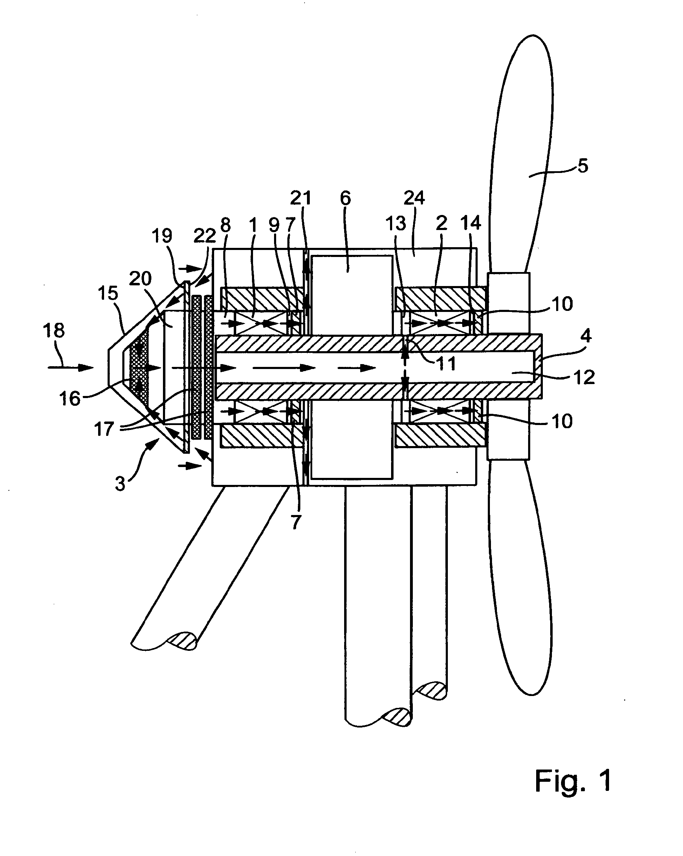

Fig. 1 zeigt eine Lageranordnung, die ein erstes, von Wasser als Medium durchströmtes Lager 1 und ein zweites, von dem ersten Lager 1 beabstandetes Lager 2 sowie eine beiden Lagern 1, 2 zugeordnete, gemeinsame Filtereinrichtung 3 und eine in beiden Lagern 1, 2 drehbar aufgenommene Welle 4 umfasst. Die Filtereinrichtung 3 ist den beiden Lagern 1, 2 in dem Sinne einströmseitig vorgeschaltet, dass das Wasser erst die Filtereinrichtung 3 passieren muss, um in das jeweilige Lager 1, 2 zugelangen. Mit der Welle 4 ist ein Rotor 5 drehfest verbunden, der von dem die Lageranordnung umströmenden Wasser angetrieben wird und dessen kinetische Energie von einem Generator 6 in elektrische Energie umgewandelt wird. Die Lageranordnung ist damit als Bestandteil eines nicht weiter dargestellten Meeresströmungskraftwerks ausgebildet und unter Wasser angeordnet.

Das zweite Lager 2 ist von der gemeinsamen Filtereinrichtung 3 in Richtung der Welle 4 deutlich beabstandet angeordnet. Um einen Zufluss des gefilterten Wassers von der Filtereinrichtung 3 zu dem zweiten Lager 2 zu ermöglichen, ist die Welle 4 abschnittsweise als Hohlwelle ausgebildet, so dass entlang dieses Abschnittes der Welle 4 gefiltertes Wasser zu einer Radialbohrung 11 in dem Korpus des hohlen Abschnittes 12 geführt wird. Die Radialbohrung 11 öffnet sich in einen Einströmbereich 13, der dem zweiten Lager 2 strömungsmäßig vorgeschaltet ist, wobei das Wasser nach Durchströmen des zweiten Lagers 2 in einen Ausströmbereich 14 tritt und die Lageranordnung verlässt.

Die Filtervorrichtung 3 ist dreiteilig ausgebildet und umfasst eine Schutzkappe 15, ein Filtersieb 16 und einen Feinfilter 17. Die Schutzkappe 15 weist eine in Richtung des anströmenden Mediums der Umgebung (Pfeil 18) kegelig, insbesondere stumpf-kegelig ausgebildete Gestalt auf. An dieser Schutzkappe 15 prallen mit dem anströmenden Medien mitgeführte grobe Partikel wie beispielsweise kleinere Steine ab. Die Schutzkappe 15 umfasst eine Einlassöffnung 19, die von der Richtung 18 des anströmenden Wasser abgewandt ist, und an der Wasser in die Filtereinrichtung 3 dringen kann. Nach Passieren der Einlassöffnung 19 dringt das Wasser an der stumpf-kegelig zulaufenden inneren Wandfläche der Schutzkappe 15 in Richtung auf die Achse der Welle 4 und gelangt zu dem Filtersieb 16, das im wesentlichen in Richtung der Achse der Welle 4 angeordnet ist. Das Filtersieb 16 hält größere Partikel aus dem Wasser zurück. Nach Passieren des Filtersiebes 16 gelangt das Wasser in einen Sammelbereich 19, der dem Feinfilter 17 strömungsmäßig vorgeschaltet ist. Von dem Sammelbereich 20 dringt das Wasser durch den Feinfilter 17, der zweilagig ausgebildet ist und zwei unabhängig voneinander einfach austauschbare Lagen eines Filtervlieses von fester Konsistenz umfasst, entweder direkt in einen Einströmbereich 8 des ersten Lagers 1 oder - in einem hierzu alternativen Strömungspfad - in den als Hohlwelle ausgebildeten Abschnitt 12 der Welle 4 zu der Radialbohrung 11, die in den Einströmbereich 13 des zweiten Lagers 2 mündet.

Das Wasser, das das erste Lager 1 passiert hat, gelangt in einen Ausströmbereich 9 und dann über eine Radialbohrung 21 in einem Gehäuse 24, in dem die Welle 4 gelagert ist, weg von der Welle 4. An dem Ausströmbereich 9 des ersten Lagers ist eine Abdeckscheibe 7 vorgesehen, die als perforierter Kreisring ausgebildet ist und ein Eindringen von verschmutzen Wasser in das erste Lager 1 verhindert, insbesondere für den Fall, dass die Welle 4 steht und kein Wasser durch die Filtereinrichtung 3 gefördert wird. Die Abdeckscheibe 7 des ersten Lagers 1 ist mit der Welle 4 drehfest verbunden und entfaltet eine Förderwirkung in Richtung der Strömung (Pfeil 18).

An dem Ausströmbereich 14 des zweiten Lagers 2 ist eine weitere Abdeckscheibe 10 angeordnet, die ebenfalls drehfest mit der Welle verbunden ist und ein Eindringen von verschmutzen Wasser in das zweite Lagers 2 bei Stillstehen der Welle 4 unterdrücken soll.

Die Lageranordnung umfasst weiter eine Fördereinrichtung 22 für das Wasser, die zwischen der Schutzkappe 15 und dem Feinfilter 17 angeordnet ist.

In dem in Fig. 1 dargestellten ersten Ausführungsbeispiel ist die Fördereinrichtung 22 als an der Schutzkappe 15 befestigte, an der Einlassöffnung 19 angeordnete perforierte Ringscheibe ausgebildet, die die Einlassöffnung 19 überdeckt und ein Eindringen von verschmutztem Wasser in den Bereich zwischen der Schutzkappe 15 und dem Filtersieb 16 verhindert. Die Schutzkappe 15 ist mit der Welle 4 drehfest verbunden, so dass bei einer Drehung der Welle 4 die perforierte Ringscheibe eine Förderwirkung für das Wasser hin zu dem Feinfilter 16 entfaltet. Die Bohrungsdurchmesser der Perforierungen der Ringscheibe nehmen in Strömungsrichtung ab, so dass bei der Drehung der Ringscheibe eine Förderwirkung hin zu dem Feinfilter 17 auftritt. Alternativ oder ergänzend zu der perforierten Ringscheibe kann die Fördereinrichtung 22 auch einen Förderpropeller aufweisen, der drehfest an der Schutzkappe 15 angeordnet ist.

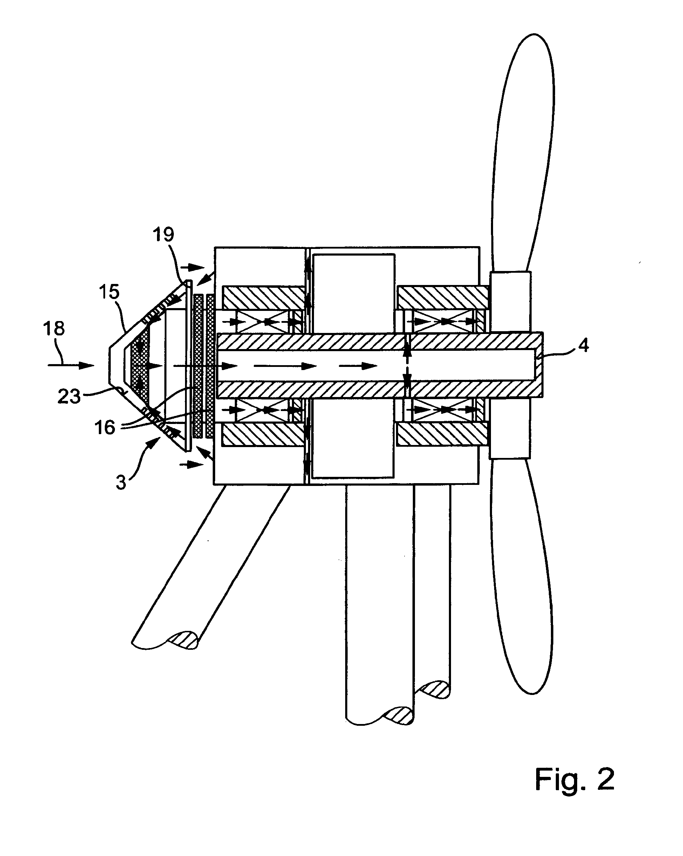

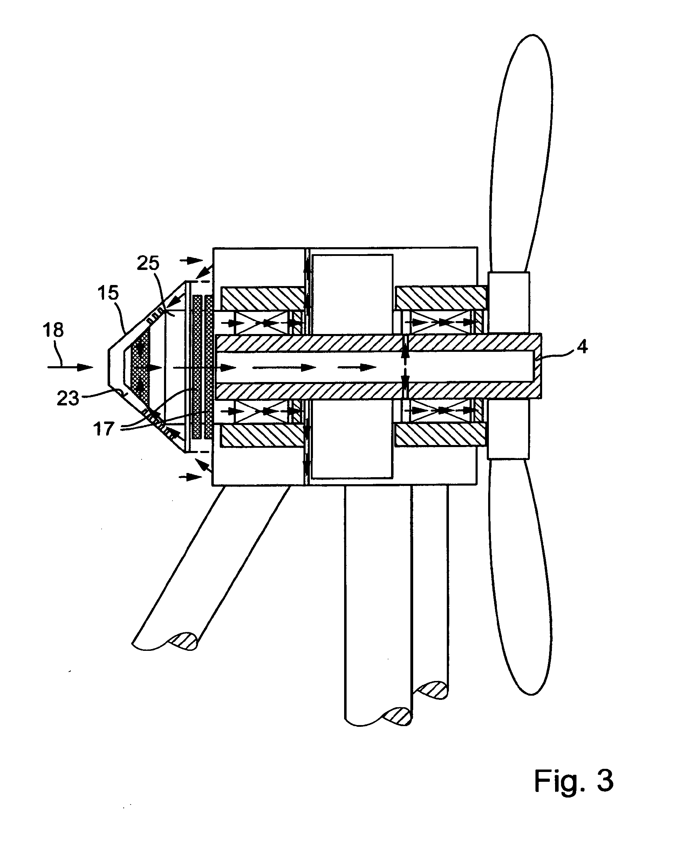

Bei der folgenden Beschreibung des zweiten bzw. dritten Ausführungsbeispiels anhand von Fig. 2 bzw. Fig. 3 bezeichnen gleiche Bezugszeichen gleiche oder in ihrer technischen Wirkung vergleichbare Merkmale. Es sollen insbesondere die Unterschiede im Vergleich zu Fig. 1 hinsichtlich der Anordnung der Fördereinrichtung 22 herausgestellt werden.

Fig. 2 zeigt eine Lageranordnung mit einer Fördereinrichtung 22, die an einer von der angeströmten Fläche der Schutzkappe 15 abgekehrten Seite 23 der Schutzkappe 15 angeordnet ist. Die von der angeströmten Fläche der Schutzkappe abgekehrte Seite 23 weist dabei ein sich konisch auf die Welle 4 hin erweiterndes Querschnittsprofil auf, wobei die Fördereinrichtung 22 als Förderschnecke ausgebildet ist, deren sechs Schneckengänge an der Seite 23 als spiralförmig umlaufende Erhebungen ausgebildet sind. Die Schutzkappe 15 und damit die Fördereinrichtung 22 ist mit der Welle 4 drehfest verbunden, so dass bei der Drehung der Welle 4 die Förderschnecke Wasser von der Einlassöffnung 19 hin zu dem Feinfilter 17 fördert.

Fig. 3 zeigt eine Lageranordnung, bei der die Schutzkappe 15 nicht drehfest mit der Welle 4 verbunden ist, sondern bezüglich der Welle 4 feststeht. Die Schutzkappe 15 ist mit dem Gehäuse 24 fest verbunden. Das Filtersieb 16 ist in einer Filteraufnahme 25 angeordnet, die konzentrisch mit und innerhalb der kegeligen Schutzkappe 15 angeordnet sowie mit der Welle 4 drehfest verbunden ist. Zwischen der Filteraufnahme 25 und der von der angeströmten Fläche der Schutzkappe 15 abgekehrten Seite 23 ist eine Passage ausgebildet, innerhalb derer die Fördereinrichtung 22 ausgebildet ist. Die Fördereinrichtung 22 ist dabei als dreigängige Förderschnecke ausgebildet, deren Schneckengänge als spiralig umlaufende Erhebungen auf der zu der Seite 23 weisenden Fläche der Filteraufnahme 25 ausgebildet sind. Bei der Drehung der Welle 4 tritt eine große Differenz in der Relativgeschwindigkeit zwischen der Schutzkappe 15 und der Fördereinrichtung 22 auf, so dass eine hohe Druckdifferenz aufgebaut wird, so dass sich insbesondere ein besonders feinporiges Material für den Feinfilter 17 auswählen lässt.

### Bezugszeichenliste

- 1: erstes Lager
- 2: zweites Lager
- 3: Filtereinrichtung
- 4: Welle
- 5: Rotor
- 6: Generator
- 7: Abdeckscheibe des ersten Lagers 1
- 8: Einströmbereich des ersten Lagers 1
- 9: Ausströmbereich des ersten Lagers 1
- 10: Abdeckscheibe des zweiten Lagers
- 11: Radialbohrung
- 12: hohler Abschnitt
- 13: Einströmbereich des zweiten Lagers 2
- 14: Ausströmbereich des zweiten Lagers 2
- 15: Schutzkappe
- 16: Filtersieb
- 17: Feinfilter
- 18: Richtung des anströmenden Wassers
- 19: Einlassöffnung
- 20: Sammelbereich
- 21: Radialbohrung
- 22: Fördereinrichtung
- 23: Seite der Schutzkappe 15
- 24: Gehäuse
- 25: Filtergehäuse

## Patentansprüche

1. Lageranordnung, umfassend
ein Lager (1, 2), das von einem Medium, insbesondere Wasser, durchströmt ist,
eine Filtereinrichtung (3), die dem Lager (1, 2) einströmseitig vorgeschaltet ist, und die Partikel aus dem Medium entfernt, wobei die Filtereinrichtung (3) eine Schutzkappe (15) und einen Feinfilter (17) umfasst,
wobei die Schutzkappe (15) dem Feinfilter (17) einströmseitig vorgeschaltet ist, und
eine Fördereinrichtung (22) für das Medium, die zwischen der Schutzkappe (15) und dem Feinfilter (17) angeordnet ist,
**gekennzeichnet, durch** eine Welle (4), die in dem Lager (1, 2) aufgenommen ist, wobei
die Fördereinrichtung (22) mit der Welle (4) drehfest verbunden ist.

2. Lageranordnung nach Anspruch 1, **dadurch gekennzeichnet, dass** die Fördereinrichtung (22) als perforierte Ringscheibe ausgebildet ist.

3. Lageranordnung nach Anspruch 1 oder 2, **dadurch gekennzeichnet, dass** die Fördereinrichtung (22) als Förderpropeller ausgebildet ist.

4. Lageranordnung nach einem der Ansprüche 1 bis 3, **dadurch gekennzeichnet, dass** ein erstes Lager (1) und ein zweites, von dem ersten Lager (1) beabstandetes Lager (2) vorgesehen ist, wobei die Filtereinrichtung (3) beiden Lagern (1, 2) gemeinsam zugeordnet ist.

5. Lageranordnung nach einem der Ansprüche 1 bis 4, **dadurch gekennzeichnet, dass** die Fördereinrichtung (22) an einer von der angeströmten Fläche der Schutzkappe (15) abgekehrten Seite (23) der Schutzkappe (15) angeordnet ist.

6. Lageranordnung nach einem der Ansprüche 1 bis 4, **dadurch gekennzeichnet, dass** die Fördereinrichtung (22) an einem Filtergehäuse (25) befestigt ist.

7. Lageranordnung nach einem der Ansprüche 4 bis 6, **dadurch gekennzeichnet, dass** die Fördereinrichtung (22) als Förderschnecke ausgebildet ist.

8. Lageranordnung nach einem der Ansprüche 1 bis 7, **dadurch gekennzeichnet, dass** die Welle (4) mindestens abschnittsweise als Hohlwelle (12) ausgebildet ist, und dass die Hohlwelle (12) eine Radialbohrung (11) aufweist, die sich zu einem dem Lager (2) einströmseitig vorgelagerten Einströmbereich (13) öffnet.

## Claims

1. Bearing assembly, comprising
a bearing (1, 2), through which a medium, in particular water, flows,
a filter device (3) which precedes the bearing (1, 2) on the inflow side and which removes particles from the medium, the filter device (3) comprising a protective cap (15) and a fine filter (17),
the protective cap (15) preceding the fine filter (17) on the inflow side, and
a conveying device (22) for the medium, which is arranged between the protective cap (15) and the fine filter (17),
**characterized by** a shaft (4) which is accommodated in the bearing (1, 2),
the conveying device (22) being connected fixedly in terms of rotation to the shaft (4).

2. Bearing assembly according to Claim 1, **characterized in that** the conveying device (22) is designed as a perforated annular disc.

3. Bearing assembly according to Claim 1 or 2, **characterized in that** the conveying device (22) is designed as a conveying propeller.

4. Bearing assembly according to one of Claims 1 to 3, **characterized in that** a first bearing (1) and a second bearing (2) spaced apart from the first bearing (1) are provided, the filter device (3) being assigned jointly to both bearings (1, 2).

5. Bearing assembly according to one of Claims 1 to 4, **characterized in that** the conveying device (22) is arranged on a side (23) of the protective cap (15) which faces away from the incident-flow surface of the protective cap (15).

6. Bearing assembly according to one of Claims 1 to 4, **characterized in that** the conveying device (22) is fastened to a filter housing (25).

7. Bearing assembly according to one of Claims 4 to 6, **characterized in that** the conveying device (22) is designed as a conveying worm.

8. Bearing assembly according to one of Claims 1 to 7, **characterized in that** the shaft (4) is designed at least partially as a hollow shaft (12), and **in that** the hollow shaft (12) has a radial bore (11) which opens towards an inflow region (13) preceding the bearing (2) on the inflow side.

## Revendications

1. Ensemble palier, comportant
un palier (1, 2) qui est traversé par un milieu, en particulier de l'eau,
un dispositif filtrant (3) qui est monté, côté entrée, en amont du palier (1, 2) et retire des particules du milieu, le dispositif filtrant (3) comportant un couvercle de protection (15) et un filtre fin (17),
le couvercle de protection (15) étant monté, côté entrée, en amont du filtre fin (17), et
un dispositif de transport (22) pour le milieu, lequel dispositif de transport est disposé entre le couvercle de protection (15) et le filtre fin (17),
**caractérisé par** un arbre (4) qui est reçu dans le palier (1, 2),
le dispositif de transport (22) étant relié de manière solidaire en rotation à l'arbre (4).

2. Ensemble palier selon la revendication 1, **caractérisé en ce que** le dispositif de transport (22) est réalisé sous forme de disque annulaire perforé.

3. Ensemble palier selon la revendication 1 ou 2, **caractérisé en ce que** le dispositif de transport (22) est réalisé sous forme d'hélice de transport.

4. Ensemble palier selon l'une quelconque des revendications 1 à 3, **caractérisé en ce qu'**un premier palier (1) et un deuxième palier (2) espacé du premier palier (1) sont prévus, le dispositif filtrant (3) étant associé en commun aux deux paliers (1, 2).

5. Ensemble palier selon l'une quelconque des revendications 1 à 4, **caractérisé en ce que** le dispositif de transport (22) est disposé sur un côté (23) du couvercle de protection (15) opposé à la surface d'arrivée d'écoulement du couvercle de protection (15).

6. Ensemble palier selon l'une quelconque des revendications 1 à 4, **caractérisé en ce que** le dispositif de transport (22) est fixé à un boîtier de filtre (25).

7. Ensemble palier selon l'une quelconque des revendications 4 à 6, **caractérisé en ce que** le dispositif de transport (22) est réalisé sous forme de transporteur à vis sans fin.

8. Ensemble palier selon l'une quelconque des revendications 1 à 7, **caractérisé en ce que** l'arbre (4) est réalisé au moins par portions sous forme d'arbre creux (12), et **en ce que** l'arbre creux (12) comprend un alésage radial (11) qui s'ouvre vers une région d'entrée (13) montée, côté entrée, en amont du palier (2).
